# EUROPÄISCHE PATENTANMELDUNG

(11) **EP 0 950 559 A2**
(43) Veröffentlichungstag der Anmeldung: **20.10.1999**
(21) Anmeldenummer: 99106702.6
(22) Anmeldetag: 01.04.1999
(51) Int. Cl.: B60L 11/18

(54) **Elektrisches System**

(30) Priorität: 16.04.1998 DE 19816918
(71) Anmelder: SIEMENS AKTIENGESELLSCHAFT, 80333 München (DE)
(72) Erfinder: Holl, Eugen, 90579 Langenzenn (DE); Lang, Hans-Peter, 91077 Neunkirchen a. Brand (DE); Fetzer, Jürgen, 91056 Erlangen (DE); Schmidt, Manfred, 91074 Herzogenaurach (DE)

(57) **Zusammenfassung**

Die vorliegende Erfindung betrifft ein elektrisches System, bei dem ein elektrisches Aggregat (1) über einen Umrichter (2) aus einer Brennstoffzelle (3) speisbar ist, wobei der Umrichter (2) einen Stützkondensator (4), Potentialklemmen (5, 6) und Schaltklemmen (7 bis 9) aufweist, wobei die Brennstoffzelle (3) über die Potentialklemmen (5, 6) und das elektrische Aggregat (1) über die Schaltklemmen (7 bis 9) mit dem Umrichter (2) verbunden ist.

Um eine besonders einfache Möglichkeit zum Starten der Brennstoffzelle (3) zu schaffen, wird erfindungsgemäß vorgeschlagen, daß eine Batterie (25) über eine Induktivität (22 und 23, 22 und 24) und einen Schalter (26) an eine der Potentialklemmen (5, 6) und an eine der Schaltklemmen (8, 9) anschaltbar ist, so daß zum Starten der Brennstoffzelle (3) der Umrichter (2) als von der Batterie (25) gespeister Hochsetzsteller betreibbar ist.

## Beschreibung

Die vorliegende Erfindung betrifft ein elektrisches System, bei dem ein elektrisches Aggregat über einen Umrichter aus einer Brennstoffzelle speisbar ist, wobei der Umrichter einen Stützkondensator, Potentialklemmen und Schaltklemmen aufweist, wobei die Brennstoffzelle über die Potentialklemmen und das elektrische Aggregat über die Schaltklemmen mit dem Umrichter verbunden ist.

Derartige elektrische Systeme sind allgemein bekannt.

Zum Starten einer Brennstoffzelle muß zunächst ein Verdichtermotor angetrieben werden. Im Stand der Technik erfolgt dies z.B. über einen Anlassermotor. Bei der EP 0 633 158 B1 wird die Brennstoffzelle mittels einer relativ schweren Pufferbatterie gestartet.

Aus der DE 195 03 749 C1 ist ein elektrisches System bekannt, bei dem ein elektrisches Aggregat über einen Umrichter aus einer Brennstoffzelle speisbar ist, wobei der Umrichter Potentialklemmen und Schaltklemmen aufweist, wobei die Brennstoffzelle über die Potentialklemmen und das elektrische Aggregat über die Schaltklemmen mit dem Umrichter verbunden ist.

Aus der DE 41 07 391 A1 ist ein elektrisches System bekannt, bei dem ein elektrisches Aggregat über einen Umrichter aus einer Batterie speisbar ist, wobei der Umrichter Potentialklemmen und Schaltklemmen aufweist, wobei die Batterie über Potentialklemmen und das elektrische Aggregat über die Schaltklemmen mit dem Umrichter verbunden ist. Ein stationäres Gleichspannungsnetz ist über eine Induktivität und einen Schalter an eine der Potentialklemmen und an eine der Schaltklemmen anschaltbar. Hierdurch ist der Umrichter zum Laden der Batterie als aus dem Gleichstromnetz gespeister Hochsetzsteller betreibbar.

Die Aufgabe der vorliegenden Erfindung besteht darin, ein elektrisches System der eingangs genannten Art zu schaffen, bei dem das Starten der Brennstoffzelle mit möglichst wenigen zusätzlichen Aggregaten möglich ist.

Die Aufgabe wird dadurch gelöst, daß eine Batterie über eine Induktivität und einen Schalter an eine der Potentialklemmen und an eine der Schaltklemmen anschaltbar ist, so daß zum Starten der Brennstoffzelle der Umrichter als von der Batterie gespeister Hochsetzsteller betreibbar ist.

Der Umrichter ist zum Ansteuern des elektrischen Aggregats sowieso vorhanden. Über den Betrieb des Umrichters als Hochsetzsteller kann die Batterie die zum Starten der Brennstoffzelle nötige Energie auf das Spannungsniveau des Umrichters einspeisen. Die Hilfsaggregate der Brennstoffzelle können somit mit ihren betriebsmäßig sowieso vorhandenen Stromversorgungen unter der Zwischenkreis-Nennspannung betrieben werden. Als spezielle Anlaß- bzw. Startvorrichtung ist lediglich die Induktivität erforderlich. Dies führt neben einer beträchtlichen Kosteneinsparung auch zu einer Gewichtsreduzierung.

Wenn das elektrische Aggregat als Elektromotor mit mindestens einer Motorwicklung ausgebildet ist und die Motorwicklung als Induktivität genutzt wird, ist auch eine speziell zum Starten der Brennstoffzelle erforderliche Induktivität entbehrlich.

Die Batterie kann direkt an eine der Schaltklemmen angeschlossen sein. Wenn der Elektromotor als Drehstrommotor, insbesondere als Drehstrom-Asynchronmotor, mit einem Sternpunkt ausgebildet ist, ergibt sich aber ein besonders effektiver Hochsetzstellerbetrieb, wenn die Batterie über den Sternpunkt an die eine der Schaltklemmen anschaltbar ist.

Denn dann können alle drei Phasen des Umrichters zum Einspeisen von Energie in den Zwischenkreis genutzt werden.

Der Schalter zum Anschalten der Batterie kann beliebig ausgebildet sein. Üblicherweise ist der Schalter aber als Schütz ausgebildet.

Das elektrische System kann ortsfest ausgebildet sein. Bevorzugt ist es aber in einem Fahrzeug angeordnet. Insbesondere in diesem Fall ist das elektrische Aggregat vorzugsweise ein Fahrmotor des Fahrzeugs.

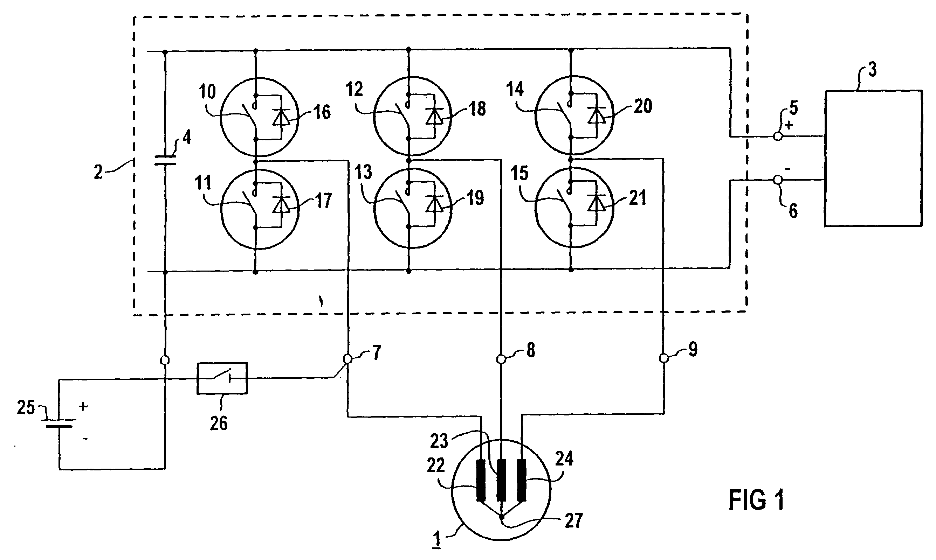

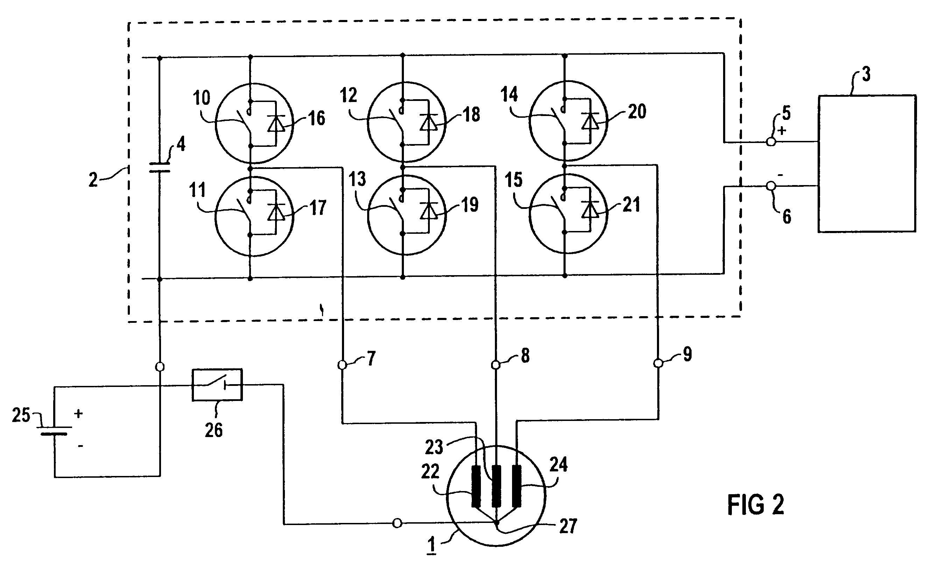

Weitere Vorteile und Einzelheiten ergeben sich aus der nachfolgenden Beschreibung eines Ausführungsbeispiels. Dabei zeigen in Prinzipdarstellung
- FIG 1 und 2: je ein elektrisches System.

Gemäß FIG 1 weist ein elektrisches System ein elektrisches Aggregat 1, einen Umrichter 2 und eine Brennstoffzelle 3 auf. Der Umrichter 2 weist einen Stützkondensator 4, Potentialklemmen 5, 6, Schaltklemmen 7 bis 9 und elektrische Ventile 10 bis 15 auf. Die elektrischen Ventile 10 bis 15 sind wahlweise als IGBT (= insulated gate bipolar transistor) oder als GTO-Thyristoren (GTO = gate turn off) ausgebildet. Den elektrischen Ventilen 10 bis 15 sind Freilaufdioden 16 bis 21 parallel gegengeschaltet.

Die Brennstoffzelle 3 ist über die Potentialklemmen 5, 6 mit dem Umrichter 2 verbunden. Das elektrische Aggregat 1 ist über die Schaltklemmen 7 bis 9 mit dem Umrichter 2 verbunden. Über den Umrichter 2 ist das elektrische Aggregat 1 aus der Brennstoffzelle 3 mit elektrischer Energie speisbar.

Das elektrische Aggregat 1 ist gemäß FIG 1 als Drehstrommotor 1, insbesondere als Drehstrom-Asynchronmotor 1, ausgebildet.

Es weist daher drei Motorwicklungen 22 bis 24 auf, die über einen Sternpunkt 27 miteinander verbunden sind.

Das elektrische Aggregat 1 kann eine beliebige Funktion erfüllen. Insbesondere wenn das elektrische System in einem Fahrzeug angeordnet ist, ist das elektrische Aggregat 1 vorzugsweise ein Fahrmotor des Fahrzeugs.

Eine Batterie 25 ist mit ihrem Minuspol an die Potentialklemme 6 direkt angeschlossen. Mit ihrem Pluspol ist die Batterie 25 über einen Schalter 26 und die Motorwicklungen 22 und 23 mit der Schaltklemme 8 verbunden. Weiterhin ist die Batterie 25 über den Schalter 26 und die Motorwicklungen 22 und 24 mit der Schaltklemme 9 verbunden. Der Schalter 26 kann beliebiger Natur sein, z.B. ein Thyristor. Vorzugsweise ist er aber als Schütz 26 ausgebildet.

Die Batterie 25 ist Bestandteil des elektrischen Systems. Wenn also das elektrische System in einem Fahrzeug angeordnet ist, ist auch die Batterie 25 in dem Fahrzeug angeordnet.

Zum Starten bzw. Anlassen der Brennstoffzelle 3 wird der Umrichter 2 als von der Batterie 25 gespeister Hochsetzsteller betrieben. Hierzu werden der Schalter 26 geschlossen und die Schaltventile 10 und 11 geöffnet. Ferner werden die Schaltventile 12 und 14 einerseits und die Schaltventile 13 und 15 andererseits im Gegentakt geöffnet und geschlossen.

Wenn die Schaltventile 13 und 15 geschlossen und die Schaltventile 12 und 14 geöffnet sind, baut sich über die Motorwicklungen 22 und 23 und die Motorwicklungen 22 und 24 ein Strom auf. Beim Umschalten der Schaltventile 12 bis 15 fließt der aufgebaute Strom aufgrund der induktiven Wirkung der Motorwicklungen 22 bis 24 auf den Stützkondensator 4. Die Motorwicklungen 22 bis 24 werden also im Hochsetzstellerbetrieb des Umrichters 2 als Induktivität genutzt. Im Zwischenkreis des Umrichters 2 wird hierdurch eine Zwischenkreisspannung aufgebaut. Mit dieser Zwischenkreisspannung kann ein Verdichtermotor angetrieben und somit die Brennstoffzelle 3 gestartet werden.

Die Ausführungsform gemäß FIG 2 entspricht im wesentlichen der Ausführungsform der FIG 1. Gleiche Elemente sind daher mit den gleichen Bezugszeichen versehen. Bei der Ausführungsform gemäß FIG 2 ist der Sternpunkt 27 aber zugänglich. Die Batterie ist in diesem Fall vorzugsweise über den Sternpunkt 27 an die Schaltklemmen 7 bis 9 anschaltbar. Denn mit dieser symmetrischen Schaltung können alle drei Motorwicklungen 22 bis 24 zum Einspeisen von elektrischer Energie in den Zwischenkreis genutzt werden.

Falls über einen einzelnen Umrichter 2 nicht genügend Energie in die Brennstoffzelle 3 einspeisbar ist, können selbstverständlich auch mehrere Elektromotoren 1 und/oder Umrichter 2 parallelgeschaltet werden.

## Patentansprüche

1. Elektrisches System, bei dem ein elektrisches Aggregat (1) über einen Umrichter (2) aus einer Brennstoffzelle (3) speisbar ist, wobei der Umrichter (2) einen Stützkondensator (4), Potentialklemmen (5, 6) und Schaltklemmen (7 bis 9) aufweist, wobei die Brennstoffzelle (3) über die Potentialklemmen (5, 6) und das elektrische Aggregat (1) über die Schaltklemmen (7 bis 9) mit dem Umrichter (2) verbunden ist,
**dadurch gekennzeichnet,**
daß eine Batterie (25) über eine Induktivität (22 und 23, 22 und 24) und einen Schalter (26) an eine der Potentialklemmen (5, 6) und an eine der Schaltklemmen (8, 9) anschaltbar ist, so daß zum Starten der Brennstoffzelle (3) der Umrichter (2) als von der Batterie (25) gespeister Hochsetzsteller betreibbar ist.

2. Elektrisches System nach Anspruch 1,
**dadurch gekennzeichnet,**
daß das elektrische Aggregat (1) als Elektromotor (1) mit mindestens einer Motorwicklung (22 bis 24) ausgebildet ist und daß die Motorwicklung (22 bis 24) als Induktivität (22 und 23, 22 und 24) genutzt wird.

3. Elektrisches System nach Anspruch 2,
**dadurch gekennzeichnet,**
daß der Elektromotor (1) als Drehstrommotor (1), insbesondere als Drehstrom-Asynchronmotor (1), mit einem Sternpunkt (27) ausgebildet ist und daß die Batterie (25) über den Sternpunkt (27) an die eine der Schaltklemmen (7 bis 9) anschaltbar ist.

4. Elektrisches System nach Anspruch 1, 2 oder 3,
**dadurch gekennzeichnet,**
daß der Schalter (26) als Schütz (26) ausgebildet ist.

5. Elektrisches System nach einem der obigen Ansprüche,
**dadurch gekennzeichnet,**
daß es in einem Fahrzeug angeordnet ist.

6. Elektrisches System nach Anspruch 5,
**dadurch gekennzeichnet,**
daß das elektrische Aggregat ein Fahrmotor (1) des Fahrzeugs ist.
